# EUROPEAN PATENT SPECIFICATION

(11) **EP 3 098 419 B1**
(45) Date of publication and mention of the grant of the patent: **06.04.2022**
(21) Application number: 16169929.3
(22) Date of filing: 17.05.2016
(51) Int. Cl.: F02C 7/36, F01D 15/10

(54) **TURBOMACHINE LOAD COUPLING DEVICE HAVING A NATURAL CONVECTION VENTILATION SYSTEM**
TURBOMASCHINENLASTKUPPLUNGSVORRICHTUNG MIT NATÜRLICHEM KONVEKTIONSBELÜFTUNGSSYSTEM
DISPOSITIF DE COUPLAGE DE CHARGE DE TURBOMACHINE AYANT UN SYSTÈME DE VENTILATION À CONVECTION NATURELLE

(30) Priority: 26.05.2015 US 201514721355
(43) Date of publication of application: 30.11.2016
(73) Proprietor: General Electric Company, Schenectady, NY 12345 (US)
(72) Inventor: PONYAVIN, Valery Ivanovich, Greenville, SC South Carolina 29615-4614 (US); FRESE, Christopher Conrad, Greenville, SC South Carolina 29615-4614 (US); LAMAR, Carl, Greenville, SC South Carolina 29615-4614 (US)
(74) Representative: Novagraaf Group

(56) References cited:
- EP-A1- 2 599 967
- EP-A1- 2 778 455
- WO-A1-02/33306
- US-A1- 2015 069 763

## Description

### BACKGROUND OF THE INVENTION

The subject matter disclosed herein relates to the art of turbomachines and, more particularly to a turbomachine load coupling device having a natural convection ventilation system.

Gas turbomachines typically include a compressor portion, a turbine portion and a combustor assembly. The combustor assembly mixes fluid from the compressor portion with a fuel to form a combustible mixture. The combustible mixture is combusted forming hot gases that pass along a hot gas path of the turbine portion. The turbine portion includes a number of stages having airfoils mounted to rotors that convert thermal energy from the hot gases into mechanical, rotational energy. Additional fluid from the compressor is passed through the airfoils and other sections of the turbine portion for cooling purposes. Oftentimes, the turbomachine may be coupled to a load, such as a generator, through a load coupling device.

WO 0233306 A1 relates to an air flow coupling guard. EP 2599967 A1 relates to a cooling system for gas turbine load coupling

### BRIEF DESCRIPTION OF THE INVENTION

The present invention is defined in the accompanying claims. A load coupling device includes a housing including an interior portion, an ambient air inlet provided in the housing, a load coupling shaft, and a load coupling guard arranged in the housing. The load coupling guard includes a turbomachine end and a load end and a passage extending therebetween. A vent extends upwardly from the load coupling guard. The vent is fluidically exposed to the load end. An ambient air inlet passage is formed in the load coupling guard and fluidically connects the ambient air inlet and the vent. The load end is substantially fluidically isolated from the turbomachine end.

According to an aspect of an exemplary embodiment according to claim 1, in a turbomachine including a compressor portion, a turbine portion operatively connected to the compressor portion, a combustor assembly fluidically connected to each of the compressor portion and the turbine portion, and a load mechanically linked to one of the compressor portion and the turbine portion, a load coupling device is configured to interface with the one of the compressor portion and the turbine portion and the load. The load coupling device includes a housing including an interior portion, an ambient air inlet provided in the housing, and a load coupling guard arranged in the housing. The load coupling guard includes a turbomachine end coupled to the one of the compressor portion and the turbine portion, a load end coupled to the load, and a passage extending therebetween. A vent extends upwardly from the load coupling guard. The vent is fluidically exposed to the load end. An ambient air inlet passage is formed in the load coupling guard and fluidically connects to the ambient air inlet and the vent. The load end is substantially fluidically isolated from the turbomachine end.

According to yet another aspect of an exemplary embodiment according to claim 4, a turbomachine includes a compressor portion, a turbine portion operatively connected to the compressor portion, a combustor assembly fluidically connected to each of the compressor portion and the turbine portion, a load mechanically linked to one of the compressor portion and the turbine portion, an intake system fluidically connected to the compressor portion, and a load coupling device interfacing with the one of the compressor portion and the turbine portion and the load. The load coupling device includes a housing including an interior portion, an ambient air inlet provided in the housing, and a load coupling guard arranged in the housing. The load coupling guard includes a turbomachine end coupled to the one of the compressor portion and the turbine portion, a load end coupled to the load, and a passage extending therebetween. A vent extends upwardly from the load coupling guard. The vent is fluidically exposed to the load end. An ambient air inlet passage is formed in the load coupling guard and fluidically connects to the ambient air inlet and the vent. The load end is substantially fluidically isolated from the turbomachine end.

These and other advantages and features will become more apparent from the following description taken in conjunction with the drawings.

### BRIEF DESCRIPTION OF DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic representation of a turbomachine system including a load coupling device, in accordance with an exemplary embodiment;
FIG. 2 depicts the load coupling device, in accordance with an exemplary embodiment;
FIG. 3 depicts a load coupling guard of the load coupling device, in accordance with an exemplary embodiment; and
FIG. 4 depicts a partial cross-sectional side view of the load coupling guard, in accordance with an exemplary embodiment.

The detailed description explains embodiments of the invention, together with advantages and features, by way of example with reference to the drawings.

### DETAILED DESCRIPTION OF THE INVENTION

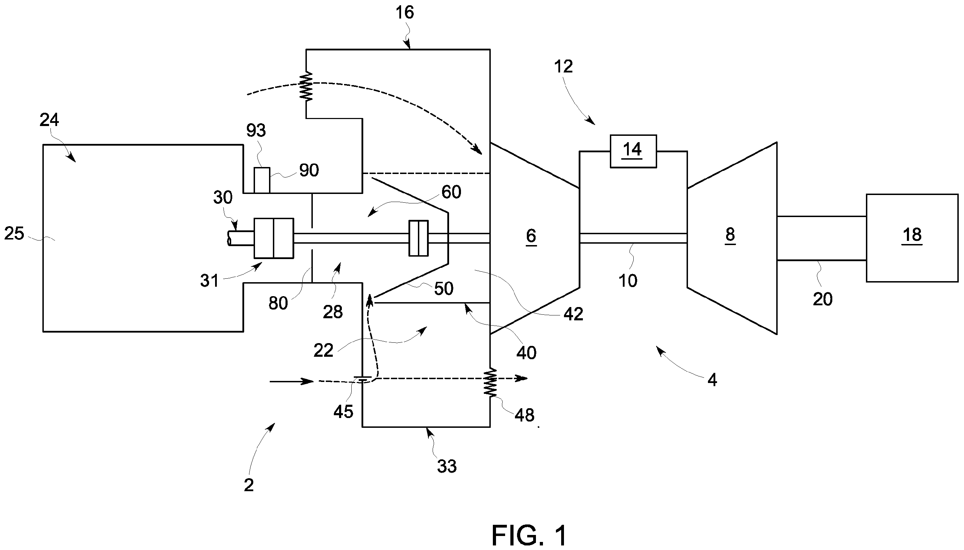

A turbomachine system, in accordance with an exemplary embodiment, is indicated generally at 2, in FIG. 1. Turbomachine system 2 includes a turbomachine 4 having a compressor portion 6 and a turbine portion 8 operatively connected by a common compressor/turbine shaft 10. Compressor portion 6 is also fluidically connected to turbine portion 8 through a combustor assembly 12. Combustor assembly 12 includes at least one combustor 14. Turbomachine system 2 also includes an intake system 16 fluidically coupled to an intake (not separately labeled) of compressor portion 6. Intake system 16 may condition an airflow passing into compressor portion 6.

An exhaust system 18 is fluidically connected to an outlet (also not separately labeled) of turbine portion 8 through a diffuser portion 20. Exhaust system 18 may condition exhaust gases passing from turbine portion 8. A load coupling device 22 provides an interface between turbomachine 4 and a load 24. Load 24 may take the form of a generator 25 coupled to compressor portion 6 through a load coupling shaft 28. Load coupling shaft 28 provides an interface between common compressor/turbine shaft 10 and a generator input/drive shaft 30. In the embodiment shown, load coupling shaft 28 is joined to generator input/drive shaft 30 through a flange 31. An airflow compartment 33 is arranged between load 24 and turbomachine 4. Airflow compartment 33 provides an airflow to load coupling device 22. As will be detailed more fully below, load coupling device 22 limits gases, such as hydrogen, produced in load 24, from passing into airflow compartment 33.

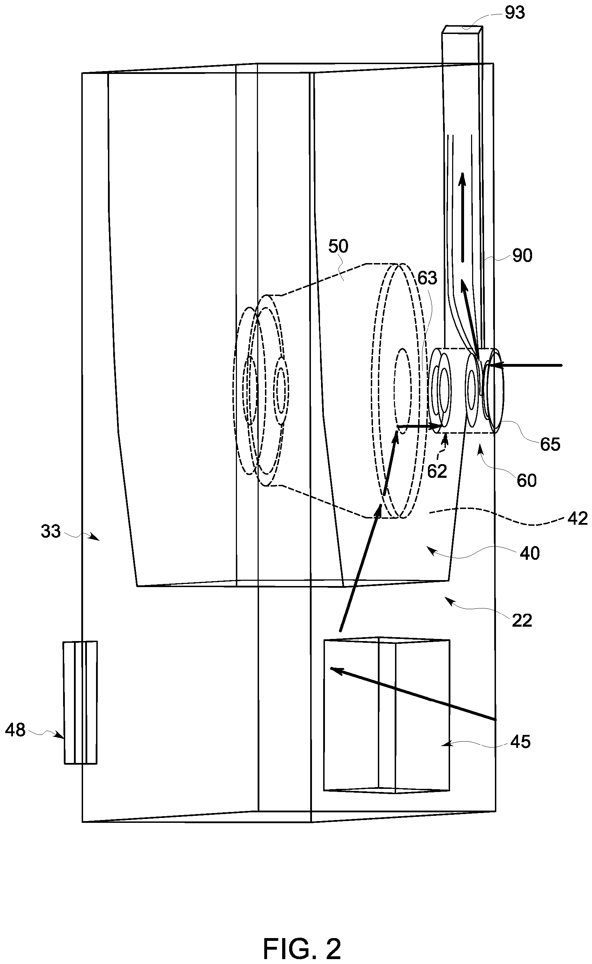

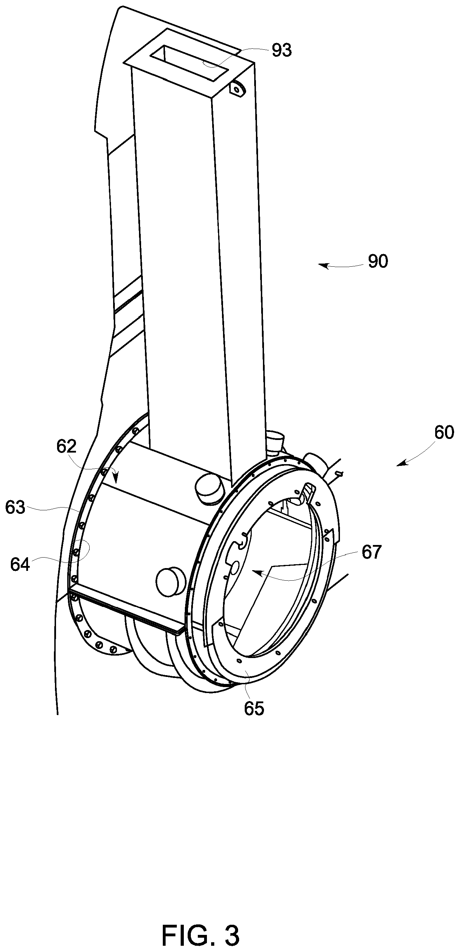

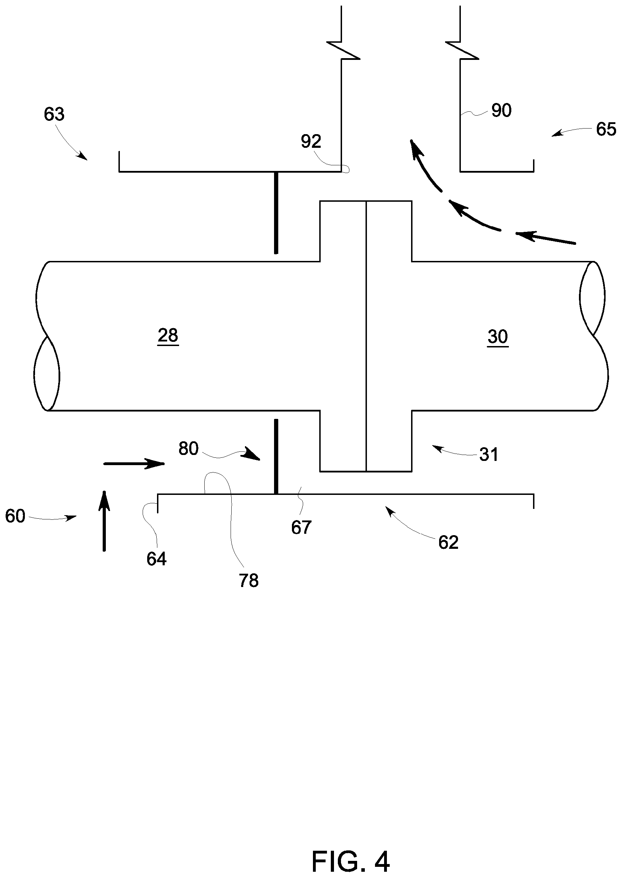

In accordance with an aspect of an exemplary embodiment illustrated in FIGs. 2-4, load coupling device 22 fluidically connected with a housing or inlet plenum enclosure 40 having an interior portion 42. Housing 33 includes an ambient air inlet 45 and an ambient air outlet 48. Ambient air outlet 48 may direct ambient air into a turbomachine compartment (not shown) housing turbomachine 4. An air-to-load coupling compartment 50 may reside within interior portion 42. In addition, load coupling device 22 houses a load coupling guard 60. In accordance with an aspect of an exemplary embodiment, load coupling guard 60 includes a body 62 having a turbomachine end 63 operatively coupled to compressor portion 6 through a flange 64 and a load end 65 operatively connected to load 24. Load coupling guard 60 may also include grounding brushes (not shown).

In still further accordance with an exemplary embodiment, load coupling guard 60 includes a passage 67 that extends between turbomachine end 63 and load end 65. Passage 67 is receptive of load coupling shaft 28 that operatively connects load 24 and turbomachine 4. Passage 67 includes an inner surface 78 from which extends a baffle member 80 that limits a flow of gases from load 24 to turbomachine 4. Baffle member 80 extends radially inwardly into passage 67 to prevent gases from flowing from load end 65 to turbomachine end 63. At this point, it should be understood that the number and location of baffle member 80 may vary. For instance, load coupling guard 60 may include a baffle member arranged both upstream and downstream of flange 31.

In still yet further accordance with an exemplary embodiment, load coupling guard 60 includes a vent 90 that extends upwardly from body 62. Vent 90 includes an inlet 92 fluidically connected to passage 67 and an outlet 93. Vent 90 is sized to establish a chimney effect sufficient to overcome any negative pressure in passage 67. The chimney effect draws in ambient air flowing through load coupling guard 60 and gases passing from load 24. In this manner, vent 90 cooperates with baffle member 80 to still further prevent gases passing from load 24 into turbomachine 4. In addition, the use of vent 90, coupled with ambient air, establishes a natural convective flow that reduces or eliminates the need for costly plumbing and other systems to introduce an airflow into load coupling guard 60.

While the invention has been described in detail in connection with only a limited number of embodiments, it should be readily understood that the invention is not to be seen as limited by the foregoing description, but is only limited by the scope of the appended claims.

## Claims

1. A load coupling device (22) for a turbomachine (4), the turbomachine comprising:
a compressor portion (6);
a turbine portion (8) operatively connected to the compressor portion (6);
a combustor assembly (12) fluidically connected to each of the compressor portion (6) and the turbine portion (8); and
a load (24) mechanically linked to one of the compressor portion (6) and the turbine portion (8);
the load coupling device (22) being configured to interface with the one of the compressor portion (6) and the turbine portion (8) and the load (24); said load coupling device (22) comprising:
a housing (40) including an interior portion (42);
an ambient air inlet (45) provided in the housing (40);
a load coupling guard (60) arranged in the housing (40), the load coupling guard (60) including a turbomachine end (63) and a load end (65) and a passage (67) extending therebetween;
a vent (90) extending upwardly from the load coupling guard (60), the vent (90) having an inlet fluidically connected to the passage (67) and an outlet (93) connected to the ambient and being fluidically exposed to the load end (65), the vent being sized to establish a chimney effect sufficient to overcome any negative pressure in passage (67);
an ambient air inlet passage formed in the load coupling guard (60) and fluidically connecting the ambient air inlet (45) and the vent (90);
wherein the load coupling guard (60) further includes at least one baffle member (80) extending radially inwardly into the passage (67), said baffle member (80) being axially located between the ambient air inlet (45) in the housing (40) and the vent (90), the at least one baffle member (80) substantially preventing gases entering the load end (65) from passing to the turbomachine end (63);
wherein the vent is axially located between the load end (65) and the baffle (80); and
wherein the load (24) is configured to be mechanically linked to one of the compressor portion (6) and the turbine portion (8) through a shaft (28) extending through the load coupling guard (60).

2. The load coupling device (22) according to claim 1, wherein the load coupling device (22) is configured to be mounted in an airflow compartment (33) arranged between the load (24) and the turbomachine (4).

3. The load coupling device (22) according to any of claims 1 to 2, wherein the load (24) with which the load coupling device is configured to interface comprises a generator (25).

4. A turbomachine system (2) comprising:
a compressor portion (6);
a turbine portion (8) operatively connected to the compressor portion (6);
a combustor assembly (12) fluidically connected to each of the compressor portion (6) and the turbine portion (8);
an intake system (16) fluidically connected to the compressor portion (6);
a load (24) mechanically linked to one of the compressor portion (6) and the turbine portion (8); and
a load coupling device (22) as claimed in any preceding claim.

5. The turbomachine system (2) according to claim 4, wherein the load (24) is mechanically linked to one of the compressor portion (6) and the turbine portion (8) through a shaft (28) extending through the load coupling guard (60).

6. The turbomachine system (2) according to claim 4, further comprising: an airflow compartment (33) arranged between the load (24) and the turbomachine (4), wherein the load coupling device (22) is mounted in the airflow compartment (33).

7. The turbomachine system (2) according to any of claims 4 to 6, wherein the load (24) comprises a generator (25).

## Patentansprüche

1. Lasteinkopplungsvorrichtung (22) für eine Turbomaschine (4), wobei die Turbomaschine Folgendes umfasst:
einen Verdichterabschnitt (6);
einen mit dem Verdichterabschnitt (6) wirkverbundenen Turbinenabschnitt (8);
eine mit dem Verdichterabschnitt (6) und dem Turbinenabschnitt (8) strömungstechnisch verbundenen Brennkammerbaugruppe (12); und
eine mechanisch mit einem von dem Verdichterabschnitt (6) und dem Turbinenabschnitt (8) verbundene Last (24);
wobei die Lasteinkopplungsvorrichtung (22) dazu eingerichtet ist, zwischen dem einen von dem Verdichterabschnitt (6) und dem Turbinenabschnitt (8) und der Last (24) angeschlossen zu werden; wobei die Lasteinkopplungsvorrichtung (22) Folgendes umfasst:
ein einen inneren Abschnitt (42) einschließendes Gehäuse (40);
einen in dem Gehäuse (40) bereitgestellten Umgebungslufteintritt (45);
einen in dem Gehäuse (40) angeordneten Lasteinkopplungsschutz (60), wobei der Lasteinkopplungsschutz (60) ein Turbomaschinenende (63) und ein Lastende (65) und einen sich dazwischen erstreckenden Durchgang (67) einschließt;
einen sich von dem Lasteinkopplungsschutz (60) nach oben erstreckenden Abzugsschacht (90), wobei der Abzugsschacht (90) einen mit dem Durchgang (67) strömungstechnisch verbundenen Eintritt und einen mit der Umgebung verbundenen und strömungstechnisch dem Lastende (65) ausgesetzten Austritt (93) einschließt, wobei der Abzugsschachts so bemessen ist, dass durch ihn ein zum Überwinden eines Unterdrucks im Durchgang (67) ausreichender Kamineffekt erzeugt wird;
einen in dem Lasteinkopplungsschutz (60) gebildeten und strömungstechnisch den Umgebungslufteintritt (45) und den Abzugsschacht (90) verbindenden Umgebungslufteintrittsdurchgang;
wobei der Lasteinkopplungsschutz (60) ferner mindestens ein sich radial nach innen in den Durchgang (67) erstreckendes Umlenkelement (80) einschließt, wobei sich das Umlenkelement (80) axial zwischen dem Umgebungslufteintritt (45) in dem Gehäuse (40) und dem Abzugsschacht (90) befindet, wobei das mindestens eine Umlenkelement (80) im Wesentlichen das Durchströmen von in das Lastende (65) eintretenden Gasen zum Turbomaschinenende (63) unterbindet;
wobei sich der Abzugsschacht axial zwischen dem Lastende (65) und dem Umlenkelement (80) befindet; und
wobei die Last (24) dazu ist eingerichtet ist, über eine durch den Lasteinkopplungsschutz (60) verlaufende Welle (28) mechanisch mit einem von dem Verdichterabschnitt (6) und dem Turbinenabschnitt (8) verbunden zu werden.

2. Lasteinkopplungsvorrichtung (22) nach Anspruch 1, wobei die Lasteinkopplungsvorrichtung (22) dazu eingerichtet ist, in eine zwischen der Last (24) und der Turbomaschine (4) angeordnete Luftströmungskammer (33) montiert zu werden.

3. Lasteinkopplungsvorrichtung (22) nach einem der Ansprüche 1 bis 2, wobei die Last (24), die für den Anschluss an die Lasteinkopplungsvorrichtung eingerichtet ist, einen Generator (25) umfasst.

4. Turbomaschinensystem (2), Folgendes umfassend:
einen Verdichterabschnitt (6);
einen mit dem Verdichterabschnitt (6) wirkverbundenen Turbinenabschnitt (8);
eine mit dem Verdichterabschnitt (6) und dem Turbinenabschnitt (8) strömungstechnisch verbundenen Brennkammerbaugruppe (12);
ein mit dem Verdichterabschnitt (6) strömungstechnisch verbundenes Einlasssystem (16);
eine mechanisch mit einem von dem Verdichterabschnitt (6) und dem Turbinenabschnitt (8) verbundene Last (24); und
eine Lasteinkopplungsvorrichtung (22) nach einem der vorstehenden Ansprüche.

5. Turbomaschinensystem (2) gemäß Anspruch 4, wobei die Last (24) über eine durch den Lasteinkopplungsschutz (60) verlaufende Welle (28) mechanisch mit einem von dem Verdichterabschnitt (6) und dem Turbinenabschnitt (8) verbunden ist.

6. Turbomaschinensystem (2) gemäß Anspruch 4, ferner umfassend eine zwischen der Last (24) und der Turbomaschine (4) angeordnete Luftströmungskammer (33), wobei die Lasteinkopplungsvorrichtung (22) in die Luftströmungskammer (33) montiert ist.

7. Turbomaschinensystem (2) nach einem der Ansprüche 4 bis 6, wobei die Last (24) einen Generator (25) umfasst.

## Revendications

1. Dispositif de couplage de charge (22) pour une turbomachine (4), la turbomachine comprenant :
une partie de compresseur (6) ;
une partie de turbine (8) raccordée fonctionnellement à la partie de compresseur (6) ;
un ensemble de chambre de combustion (12) raccordé fluidiquement à chacune de la partie de compresseur (6) et de la partie de turbine (8) ; et
une charge (24) liée mécaniquement à une de la partie de compresseur (6) et de la partie de turbine (8) ;
le dispositif de couplage de charge (22) étant configuré pour interagir avec l'une de la partie de compresseur (6) et de la partie de turbine (8) et la charge (24) ; ledit dispositif de couplage de charge (22) comprenant :
un logement (40) incluant une partie intérieure (42) ;
une entrée d'air ambiant (45) prévue dans le logement (40) ;
un protecteur de couplage de charge (60) agencé dans le logement (40), le protecteur de couplage de charge (60) incluant une extrémité de turbomachine (63) et une extrémité de charge (65) et un passage (67) s'étendant entre elles ;
un évent (90) s'étendant vers le haut depuis le protecteur de couplage de charge (60), l'évent (90) ayant une entrée raccordée fluidiquement au passage (67) et une sortie (93) raccordée à l'ambiant et étant exposée fluidiquement à l'extrémité de charge (65), l'évent étant dimensionné pour établir un effet de cheminée suffisant pour surmonter l'une quelconque pression négative dans un passage (67) ;
un passage d'entrée d'air ambiant formé dans le protecteur de couplage de charge (60) et raccordant fluidiquement l'entrée d'air ambiant (45) et l'évent (90) ;
dans lequel le protecteur de couplage de charge (60) inclut en outre au moins un élément déflecteur (80) s'étendant radialement vers l'intérieur dans le passage (67), ledit élément déflecteur (80) étant axialement situé entre l'entrée d'air ambiant (45) dans le logement (40) et l'évent (90), l'au moins un élément déflecteur (80) empêchant essentiellement des gaz entrant dans l'extrémité de charge (65) de passer jusqu'à l'extrémité de turbomachine (63) ;
dans lequel l'évent est situé axialement entre l'extrémité de charge (65) et le déflecteur (80) ; et
dans lequel la charge (24) est configurée pour être liée mécaniquement à une de la partie de compresseur (6) et de la partie de turbine (8) à travers un arbre (28) s'étendant à travers le protecteur de couplage de charge (60).

2. Dispositif de couplage de charge (22) selon la revendication 1, dans lequel le dispositif de couplage de charge (22) est configuré pour être monté dans un compartiment de flux d'air (33) agencé entre la charge (24) et la turbomachine (4).

3. Dispositif de couplage de charge (22) selon l'une quelconque des revendications 1 à 2, dans lequel la charge (24) avec laquelle le dispositif de couplage de charge est configuré pour interagir comprend un générateur (25).

4. Système de turbomachine (2) comprenant :
une partie de compresseur (6) ;
une partie de turbine (8) raccordée fonctionnellement à la partie de compresseur (6) ;
un ensemble de chambre de combustion (12) raccordé fluidiquement à chacune de la partie de compresseur (6) et de la partie de turbine (8) ;
un système d'admission (16) raccordé fluidiquement à la partie de compresseur (6) ;
une charge (24) liée mécaniquement à une de la partie de compresseur (6) et de la partie de turbine (8) ; et
un dispositif de couplage de charge (22) tel que revendiqué dans l'une quelconque revendication précédente.

5. Système de turbomachine (2) selon la revendication 4, dans lequel la charge (24) est liée mécaniquement à une de la partie de compresseur (6) et de la partie de turbine (8) à travers un arbre (28) s'étendant à travers le protecteur de couplage de charge (60).

6. Système de turbomachine (2) selon la revendication 4, comprenant en outre : un compartiment de flux d'air (33) agencé entre la charge (24) et la turbomachine (4), dans lequel le dispositif de couplage de charge (22) est monté dans le compartiment de flux d'air (33).

7. Système de turbomachine (2) selon l'une quelconque des revendications 4 à 6, dans lequel la charge (24) comprend un générateur (25).
